Europäisches Patentamt

European Patent Office

Office européen des brevets

(11) Numéro de publication: **0 392 123**
**A1**

## (12) DEMANDE DE BREVET EUROPEEN

(21) Numéro de dépôt: 89401024.8

(22) Date de dépôt: **13.04.89**

(51) Int. Cl.⁵: **B65D 45/02, B65D 1/46**

(43) Date de publication de la demande:
**17.10.90 Bulletin 90/42**

(84) Etats contractants désignés:
**BE CH DE ES FR GB IT LI**

(71) Demandeur: **Vironneau, Pierre**
**3, rue du Vercors**
**F-31120 Portet-sur-Garonne(FR)**

(72) Inventeur: **Vironneau, Pierre**
**3, rue du Vercors**
**F-31120 Portet-sur-Garonne(FR)**

(74) Mandataire: **Morelle, Guy Georges Alain**
**CABINET MORELLE & BARDOU, SC 5,**
**Boulevard de la Méditerranée**
**F-31400 Toulouse(FR)**

(54) **Dispositif anti-fluage pour récipient.**

(57) L'invention concerne un dispositif anti-fluage pour fermeture de récipient (1) en matière plastique artificelle, du type comportant un goulot (10) muni d'une salle périphérique externe (13) servant d'appui à un couvercle (4)

Ce dispositif est remarquable en ce qu'il comprend des moyens de renfort et/ou de butée (2, 8, 11, 12) situés sur deux droites sensiblement perpendiculaires l'une à l'autre, se coupant au niveau de ladite saillie externe (13), lesdits moyens de renfort et de butée étant disposés au voisinage de chacune des faces de ladite saillie.

Applications à tous les récipients en matière plastique artificielle dans lesquels un fluide peut transiter ou être stocké.

EP 0 392 123 A1

## DISPOSITIF ANTI-FLUAGE POUR RECIPIENT

La présente invention concerne les récipients dans lesquels un liquide, et plus généralement un fluide quelconque, peut transiter ou être stocké et intéresse plus particulièrement les filtres pour eau, chauffe-eau...etc.

Ces récipients sont le plus souvent réalisés dans des matériaux rigides, par exemple polychlorure de vinyle ou styrène-acrylo-nitrile-butadiène, qui sont particulièrement coûteux. Un intérêt s'est donc manifesté pour des matières plastiques du type polymère ou copolymère qui sont plus faciles à façonner, qui présentent une solidité aux chocs remarquable et qui sont moins onéreuses. Cependant, ces matériaux, lorsqu'ils sont soumis à des contraintes mécaniques ou à des pressions constantes, se déforment dans le temps. Ainsi, dans le cas par exemple des filtres, on voit apparaître un phénomène de fluage, particulièrement sensible au niveau de la zone de fermeture du récipient.

La présente invention propose un remède à un tel défaut, simple et peu coûteux à mettre en oeuvre.

Elle a plus précisément pour objet un dispositif anti-fluage pour fermeture de récipient du type comportant un goulot muni d'une saillie périphérique externe servant d'appui à un couvercle, ce dispositif comprenant des moyens de renfort et/ou de butée situés sur deux droites sensiblement perpendiculaires l'une à l'autre se coupant au niveau de ladite saillie externe, lesdits moyens de renfort et/ou de butée étant disposés au voisinage de chacune des faces de cette saillie.

Les moyens de renfort et/ou de butée pourront ainsi opérer dans tous les axes possibles de déformation du matériau de la fermeture du récipient et plus particulièrement de la saillie périphérique externe, notamment dans un axe horizontal et dans un axe vertical.

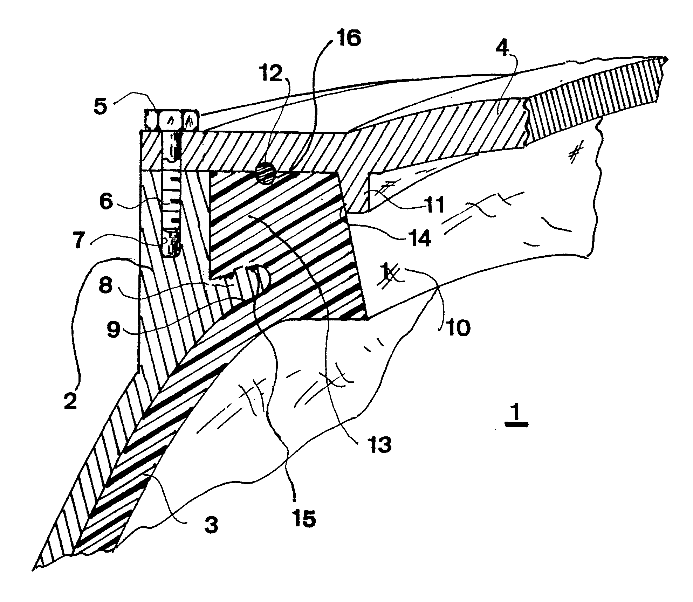

L'invention sera mieux comprise et ses caractéristiques ressortiront plus clairement à la lecture de la description donnée ci-après d'un exemple de réalisation illustré par le dessin annexé.

Ce dessin montre, selon une vue en coupe partielle, un récipient 1 pouvant servir de filtre de piscine, dont les parois 3 sont réalisées en matière plastique artificielle non rigide et qui sont revêtues d'une enveloppe en matériau rigide, par exemple en matériau composite.

Ce récipient s'ouvre à son extrémité supérieure par un goulot 10 formé d'une saillie périphérique externe 13 sur laquelle est fixé de manière amovible un couvercle 4 au moyen de boulons 5, dont un seul a été représenté, ou de tout autre moyen équivalent.

Les moyens de renfort et/ou de butée de l'invention sont disposés, comme il a été dit ci-dessus, sur un axe horizontal et sur un axe vertical, et sur le pourtour de la saillie 13 de manière à enserrer cette dernière et à agir en opposition.

Plus précisément, le dispositif de l'invention comporte un premier moyen de renfort et de butée agissant en opposition, selon un axe vertical, avec un premier moyen de butée, lesdits moyens verticaux étant respectivement constitués par un tenon 8 disposé dans un logement 9 ouvert vers l'extérieur dans la partie inférieure de la susdite saillie 13 et par une garniture d'étanchéité 12, formant joint, disposée entre la partie supérieure de ladite saillie et la face inférieure du susdit couvercle 4.

Le tenon 8 évitera ainsi l'affaissement de la saillie 13, affaissement qui pourra apparaître sous l'effet des forces de compression générées par la fixation du couvercle 4, tandis que le joint étanche 12 capable de se comprimer élastiquement sous le couvercle 4, limitera les efforts de poussée verticaux transmis à la saillie 13 par la pression régnant dans l'enceinte du récipient 1.

On observera, qu'afin d'améliorer le rôle de butée tenu par la garniture d'étanchéité 12, celle-ci est logée dans une rainure périphérique 16 ouverte de préférence dans la partie supérieure de la saillie 13. Ainsi, le tenon 8 et la garniture 12 agiront à la manière des mâchoires d'un étau pour maintenir verticalement la saillie 13.

On notera en outre que, selon une caractéristique de l'invention, les parois longitudinales du logement 9 forment avec la face latérale extérieure de ladite saillie 13 un angle non supérieur à 90°, de façon à prévenir tout glissement de ladite saillie vers l'intérieur du récipient 1, cette disposition étant éventuellement complétée par la présence de dentelures 15 creusées sur au moins l'une des parois dudit logement 9. Le profil denté desdites parois permettra ainsi un meilleur ancrage du tenon 8 dans son logement 9.

Le dispositif de l'invention comprend également un second moyen de renfort et de butée agissant en opposition, selon un axe horizontal, avec un second moyen de butée, lesdits moyens horizontaux étant respectivement constitués par une couronne 2 disposée étroitement autour de la susdite saillie 13 et par un épaulement périphérique interne 11 du susdit couvercle 4.

Cette couronne 2 permettra ainsi d'éviter l'affaissement vers la gauche du dessin de la saillie 13 et l'épaulement périphérique 11 interdira un affaissement vers la droite du dessin de cette même saillie.

On observera par ailleurs, qu'afin de parfaire le rôle tenu par l'épaulement périphérique interne 11 du couvercle 4, la face latérale interieure 14 de la saillie 13 présente un profil légèrement conique, le contact entre cette face 14 et l'épaulement 11 étant ainsi très étroit.

On remarquera toutefois que dans certains modes de réalisation, la présence de cet épaulement 11 est superflue puisque la garniture d'étanchéité 12 et le tenon 8 limiteront également dans une certaine mesure un affaissement vers la droite du dessin de la saillie 13.

De préférence, ladite couronne 2 et le susdit tenon 8 constitueront un élément monolithique en matériau composite. Le tenon 8 venu de moulage avec la couronne 2 se logera ainsi intimement dans l'étranglement 9 formé à la base de la saillie périphérique externe 13 du goulot 10 et la tige 6 du boulon 5 avec son extrémité 7 viendra s'ancrer dans ladite couronne.

On précisera par ailleurs que, pour des raisons de commodité de fabrication, cette couronne 2 pourra constituer la partie supérieure de l'enveloppe en matériau composite recouvrant en totalité les parois 3 du récipient 1.

**Revendications**

1. Dispositif anti-fluage pour fermeture de récipient (1) en matière plastique artificielle, du type comportant un goulot (10) muni d'une saillie périphérique externe (13) servant d'appui à un couvercle (4), CARACTERISE EN CE QU'il comprend des moyens de renfort et/ou de butée (2, 8, 11, 12) situés sur deux droites sensiblement perpendiculaires l'une à l'autre, se coupant au niveau de ladite saillie externe (13).

2. Dispositif selon la Revendication 1, CARACTERISE EN CE QU'il comprend un premier moyen de renfort et de butée (8) et un premier moyen de butée (12) verticaux, et au moins un second moyen de renfort et de butée horizontal (2).

3. Dispositif selon la Revendication 2, CARACTERISE EN CE QU'il comprend en outre un second moyen de butée horizontal (11).

4. Dispositif selon la Revendication 2, CARACTERISE EN CE QUE le susdit premier moyen de renfort et de butée vertical est constitué par un tenon (8) disposé dans un logement (9) ouvert à la partie inférieure de la susdite saillie (13).

5. Dispositif selon la Revendication 2, CARACTERISE EN CE QUE le susdit premier moyen de butée vertical est constitué par une garniture d'étanchéité (12) disposée entre la partie supérieure de ladite saillie (13) et la face inférieure du susdit couvercle (4).

6. Dispositif selon la Revendication 2, CARACTERISE EN CE QUE le susdit second moyen de renfort et de butée horizontal est constitué par une couronne (2) disposée autour de la susdite saillie (13).

7. Dispositif selon la Revendication 3, CARACTERISE EN CE QUE le susdit second moyen de butée horizontal est constitué par un épaulement périphérique interne (11) dudit couvercle (4).

8. Dispositif selon les Revendications 4 et 6, CARACTERISE EN CE QUE ledit tenon (8) et ladite couronne (2) constituent un élément monolithique en matériau composite.

9. Dispositif selon la Revendication 4, CARACTERISE EN CE QUE les parois dudit logement (9) forment avec la face latérale extérieure de la susdite saillie (13) un angle non supérieur à 90°.

10. Dispositif selon les Revendications 4 et/ou 9, CARACTERISE EN CE QUE les parois dudit logement (9) comportent des dentelures (15).

11. Dispositif selon la Revendication 5, CARACTERISE EN CE QUE ladite garniture d'étanchéité (12) est logée dans une rainure (16).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 253 583 (LYNCH)<br>* Colonne 2, ligne 17 - colonne 3, ligne 19; colonne 3, lignes 42-50; figures * | 1,2,5,6 ,11 | B 65 D 45/02<br>B 65 D 1/46 |
| Y | --- | 3,7 | |
| Y | US-A-4 177 934 (HAMMES et al.)<br>* Colonne 4, lignes 25-35; figure 1 * | 3,7 | |

**DOMAINES TECHNIQUES RECHERCHES (Int. Cl.5)**

B 65 D
E 04 H
F 16 J

Le présent rapport a été établi pour toutes les revendications

| Lieu de la recherche | Date d'achèvement de la recherche | Examinateur |
|---|---|---|
| LA HAYE | 07-12-1989 | CLARKE A.J. |